# EUROPEAN PATENT APPLICATION

(11) **EP 2 687 470 A1**
(43) Date of publication of application: **22.01.2014**
(21) Application number: 12757102.4
(22) Date of filing: 06.03.2012
(51) Int. Cl.: B65H 75/36, H02G 11/00

(54) **CORD ACCOMMODATION APPARATUS**

(30) Priority: 16.03.2011 JP 2011058418
(71) Applicant: Chuo Hatsujo Kabushiki Kaisha, Nagoya-shi, Aichi 458-8505 (JP)
(72) Inventor: ICHIHARA Masakazu, Nagoya-shi, Aichi 458-8505 (JP); UEDA Shunichi, Nagoya-shi, Aichi 458-8505 (JP)
(74) Representative: Kramer - Barske - Schmidtchen
(86) International application number: PCT/JP2012/055628
(87) International publication number: WO 2012/124535

(57) **Abstract**

The cord accommodation apparatus of the present application includes a housing and a pulley mechanism. The pulley mechanism includes a plurality of movable pulleys. The movable pulleys are attached to the housing so as to be able to move freely in an up and down direction, and a middle portion of an electrical cord is wound around the movable pulleys. At least one of the plurality of movable pulleys moves upwards with respect to the housing when the electrical cord is pulled out from the accommodation apparatus, while by contrast the electrical cord is accommodated in the accommodation apparatus by this movable pulley, that has previously moved upwards, moving downwards.

## Description

### TECHNICAL FIELD

The technology disclosed in this specification relates to a cord accommodation apparatus that accommodates an electrical cord.

### BACKGROUND ART

An electrical cord is employed for connecting together an electric motor (including an electric motor that is driven by a secondary battery) and a power supply. Since a distance between the electric motor and the power supply changes according to a position of the power supply and a position of the electric motor, a length of the electrical cord is determined as being a maximum length that is considered to be required in expected state of usage. As a consequence, depending upon the state of usage, sometimes the length of the electrical cord may be too long. In this case, a problem can arise that the cord becomes slack between the power supply and the electric motor, and that contact between the cord and some other device may occur. Accordingly, cord accommodation apparatuses of various types have been developed (for example, see Japanese Patent Application Publication No. 2010-52861 etc.) from which only a required length of electrical cord can be pulled out. The cord accommodation apparatus disclosed in Japanese Patent Application Publication No. 2010-52861 includes a drum that is rotatably fitted in a casing, and the electrical cord is wound around an outer circumference of this drum. During use, just the required length of the electrical cord is pulled out from the drum, and after use it is wound back onto the drum.

### SUMMARY OF INVENTION

### TECHNICAL PROBLEM

With this type of cord accommodation apparatus, it is convenient if the electrical cord can be automatically returned to the accommodation apparatus after use. For providing such a mechanism to the cord accommodation apparatus of Japanese Patent Application Publication No. 2010-52861, the drum may be biased by a spring in a direction to wind up the cord. When such a structure is employed, the drum is rotated against a biasing force of the spring when the electrical cord is pulled out, and elastic energy is stored in the spring. And, after usage, the drum is rotated in the winding up direction by the elastic energy stored in the spring, so that the electrical cord is wound back onto the drum. However a problem arises that, when the drum is biased by the spring in the direction to wind up the cord, an operating force for pulling out the electrical cord becomes greater, when the electrical cord is further pulled out.

An object of this specification is to provide a cord accommodation apparatus with which an electrical cord can be pulled out while an operating force for pulling out the electrical cord remains constant, and that is capable of automatically accommodating the electrical cord after use.

### SOLUTION TO TECHNICAL PROBLEM

A cord accommodation apparatus disclosed in this specification comprises a housing and a pulley mechanism. The pulley mechanism comprises a plurality of movable pulleys. Each of the movable pulleys is attached to the housing so as to shift freely in an up and down direction, with a middle section of the electrical cord being wound around. And, when the electrical cord is pulled out from the accommodation apparatus, at least one of the plurality of movable pulleys is shifted upwards with respect to the housing. On the other hand, the electrical cord is accommodated in the accommodation apparatus by this movable pulley, that had previously shifted upwards, shifting downwards. Here, the "up and down direction" in which the movable pulley shifts may be any direction in which the movable pulley previously having shifted upwards can shift downwards due to its own weight. Due to this, the teachings herein are not restricted to a case in which the movable pulley shifts in a vertical direction; it would also be acceptable for the movable pulley, for example, to shift in a slanting direction at an angle to the vertical direction.

With this cord accommodation apparatus, the plurality of movable pulleys is provided and is attached to the housing so as to shift freely in the up and down direction. Since a force for shifting the movable pulley in the upward direction is constant irrespective of an amount by which the electrical cord is pulled out, accordingly an operating force for pulling the cord out remains constant, irrespective of the amount by which the electrical cord is pulled out. Moreover, when the electrical cord is to be accommodated, it is possible for the electrical cord to be accommodated automatically, since the movable pulley shifts downwards due to its own weight.

### BRIEF DESCRIPTION OF DRAWINGS

Fig. 1 is a schematic figure showing a structure of an automobile production line to which a cord accommodation apparatus according to an embodiment is installed;
Fig. 2 is a front view of this cord accommodation apparatus;
Fig. 3 is a sectional view of Fig. 2 along a line III-III;
Fig. 4 is a sectional view of Fig. 2 along a line IV-IV; and
Fig. 5 is a schematic figure for explanation of a cord accommodation apparatus according to a variant.

### DESCRIPTION OF EMBODIMENTS

A cord accommodation apparatus disclosed in this specification can be used for accommodating an electrical cord that connects a power supply to an electric motor. The cord accommodation apparatus may comprise a housing and a pulley mechanism. The pulley mechanism may comprise a plurality of movable pulleys. Each of the movable pulleys may be attached to the housing so as to shift freely in an up and down direction, with a middle section of the electrical cord being wound around. When the electrical cord is pulled out from the accommodation apparatus, at least one of the plurality of movable pulleys may be shifted upwards with respect to the housing. And the electrical cord may be accommodated in the accommodation apparatus by this movable pulley, that had previously shifted upwards, shifting downwards.

With the cord accommodation apparatus disclosed in this specification, at least two of the plurality of movable pulleys may be arranged along a direction of their axial lines. According to this type of structure, it is possible to prevent a space required by the cord accommodation apparatus in a direction orthogonal to the axial lines of the movable pulleys from becoming great.

With the cord accommodation apparatus disclosed in this specification, the pulley mechanism may further include a third movable pulley that, with respect to the at least two movable pulleys that are arranged along the direction of their axial lines, is arranged along a direction that is orthogonal to that axial line direction. The middle section of the electrical cord may also be wound around this third movable pulley. According to this type of structure, the movable pulleys are arranged in a two dimensional configuration, and accordingly they can be arranged in a manner that is appropriate for the space available for installation.

With the cord accommodation apparatus disclosed in this specification, the axial lines of the at least two movable pulleys that are arranged along the direction of their axial lines may lie upon same straight line, and the movable pulleys may be rotatably supported by a single shaft member. Alternatively, each of the movable pulleys may be rotatably supported by a separate shaft member. It should be understood that the shaft member may be guided by a guide that is provided to the housing. If the shaft member is guided by the guide, then it is possible for the shifting of the movable pulleys in the up and down direction to be performed smoothly.

With the cord accommodation apparatus disclosed in this specification, the middle section of the electrical cord may be wound a plurality of times around at least one of the plurality of movable pulleys. According to this type of structure, while keeping a number of the movable pulleys small, it is possible to make a maximum amount by which the electrical cord can be pulled out (i.e. a length thereof that is accommodated) long.

With the cord accommodation apparatus disclosed in this specification, the pulley mechanism may further include a direction alteration pulley that changes a position at which the electrical cord is pulled out. According to this type of structure, it is possible to pull out the electrical cord at any desired position.

### EMBODIMENTS

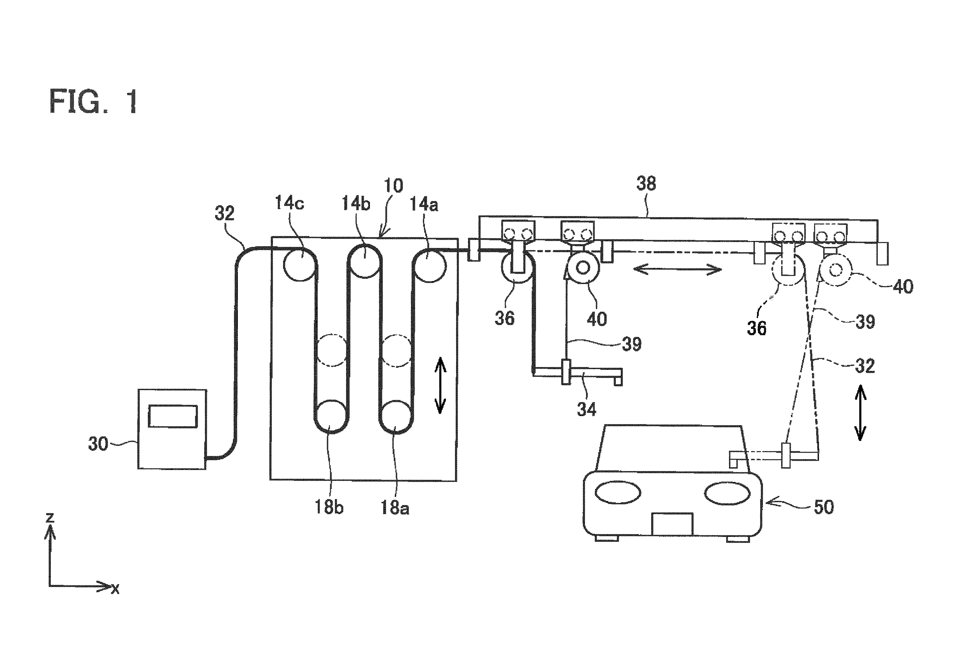

In the following, the cord accommodation apparatus according to an embodiment will be explained with reference to the drawings. First, a general structure of a production line to which the cord accommodation apparatus of this embodiment is installed will be explained. As shown in Fig. 1, a cord accommodation apparatus 10 of this embodiment is installed to a production line upon which automobiles 50 are manufactured, and accommodates an electrical cord 32. One end of the electrical cord 32 is connected to a power supply 30, and the other end of the electrical cord 32 is connected to an electric tool 34 (for example, a nut wrench). The electric tool 34 is operated by electrical power that is supplied from the power supply 30 via the electrical cord 32.

Between the other end of the electrical cord 32 (i.e. its end portion that is connected to the electric tool 34) and the cord accommodation apparatus 10, the electrical cord 32 is supported by a pulley 36. The pulley 36 is attached to a guide 38 provided over the automobile 50 as it moves along the production line. A trolley 40 is attached to the guide 38. A dangling wire 39 is wound upon the trolley 40, and the end of the dangling wire 39 is attached to the electric tool 34.

The pulley 36 and the trolley 40 can shift while being guided by the guide 38. Due to this, using the electric tool 34, the operator is able to perform tasks on both sides of the automobile 50, i.e. on both its one side and its other side. When thus performing a task upon the automobile 50 with the electric tool 34, the operator grasps the electric tool 34, and shifts the tool 34 to a working position. Because of this, a working force (pulling force) is exerted by the operator to pull the electrical cord 32 out from the cord accommodation apparatus 10. And, when the operator relaxes the working force that he is exerting upon the electrical cord 32, the electric tool 34 returns to its initial height (i.e. to its height shown in Fig. 1).

It should be understood that, as described hereinafter, in this embodiment, the electrical cord 32 includes a first electrical cord 32a that is connected to the power supply 30 and a second electrical cord 32b that is connected to the electric tool 34. The power supply 30 and the electric tool 34 are electrically connected together by one end of the first electrical cord 32a being connected to one end of the second electrical cord 32b.

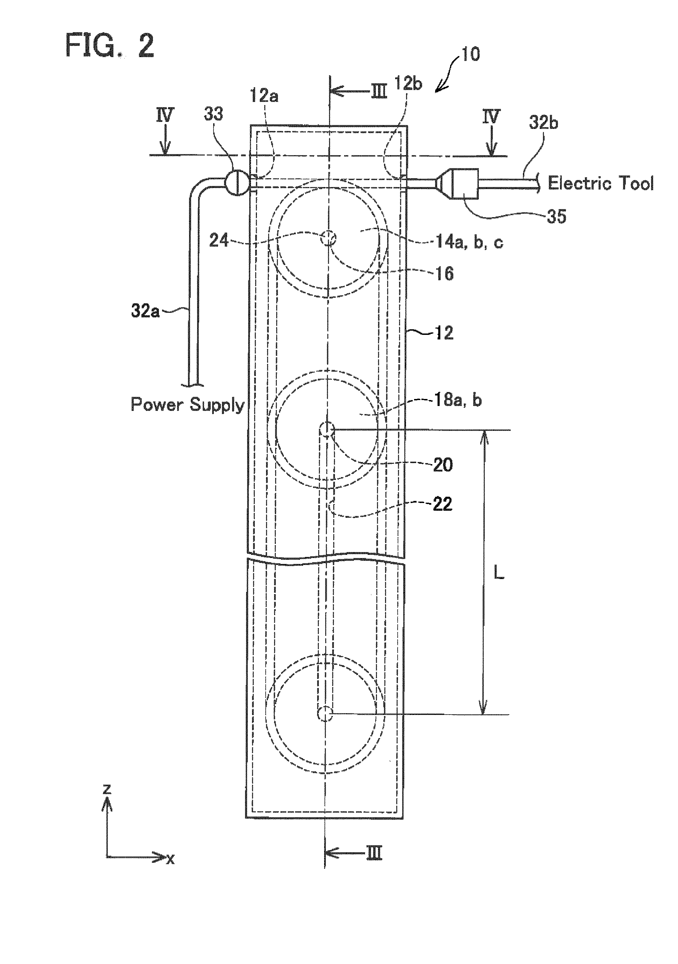

As shown in Figs. 2 through 4, the cord accommodation apparatus 10 comprises a housing 12 and a pulley mechanism (14, 18, and so on). The housing 12 is formed from a plurality of plates in a shape of a rectangular parallelepiped. It should be understood that the shape of the housing 12 is not limited to being a rectangular parallelepiped; the housing 12 could be shaped as a circular cylinder or as a multi-cornered prism (for example, as a hexagonal prism).

As shown in Fig. 2, through holes 12a and 12b are formed in side plates of the housing 12 that extend in a y-z plane. The first electrical cord 32a is passed through these through holes 12a and 12b. And a stopper 33 is fitted on the first electrical cord 32a. The stopper 33 contacts against the housing 12 in the neighborhood of the through hole 12a (on the power supply 30 side). Due to the stopper 33, excessive winding up of the first electrical cord 32a into the cord accommodation apparatus 10 is prevented. A connector 35 is provided on the other end of the first electrical cord 32a (i.e. on its end towards the electric tool 34). Due to this connector 35, excessive winding up of the first electrical cord 32a into the cord accommodation apparatus 10 is prevented. One end of the second electrical cord 32b is connected to the connector 35.

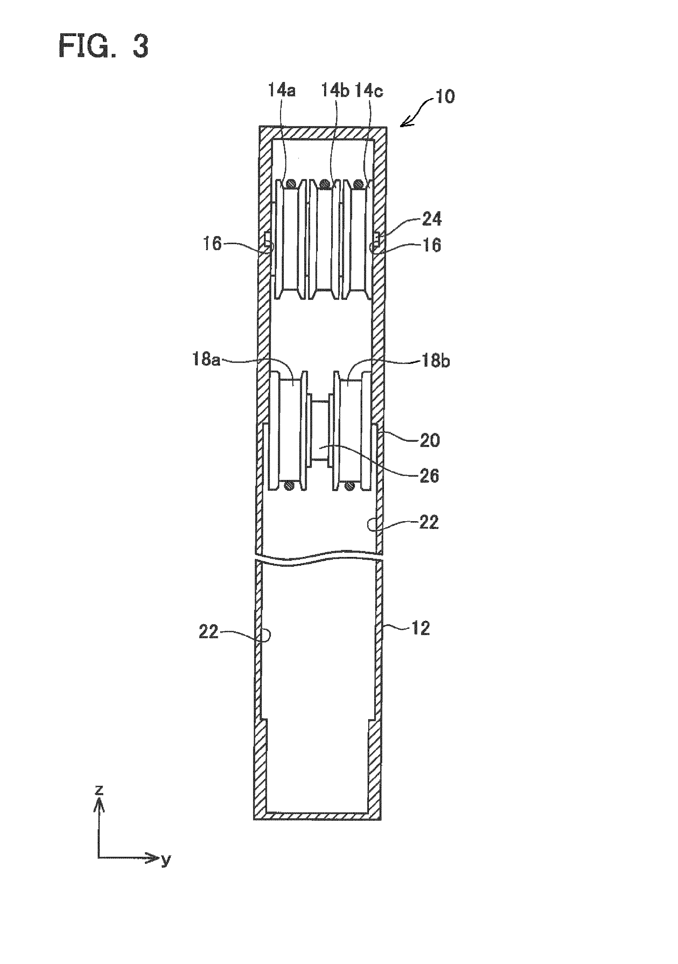

As best shown in Figs. 2 and 3, concave portions 16 and guide grooves 22 are formed on the inner wall surfaces of side plates of the housing 12 that extend in an x-z plane. The concave portions 16 are formed towards upper ends of these plates of the housing 12. An end of a shaft member 24 is fitted into each concave portion 16. A guide groove 22 is formed below each concave portion 16. These guide grooves 22 extend in the up and down direction (i.e. in a z direction). A shaft member 20 is fitted into the guide grooves 22 so as to be slidable therein. An amount of sliding L of the shaft member 20 is determined by a length of the guide grooves 22 in the up and down direction (i.e. in a sliding direction).

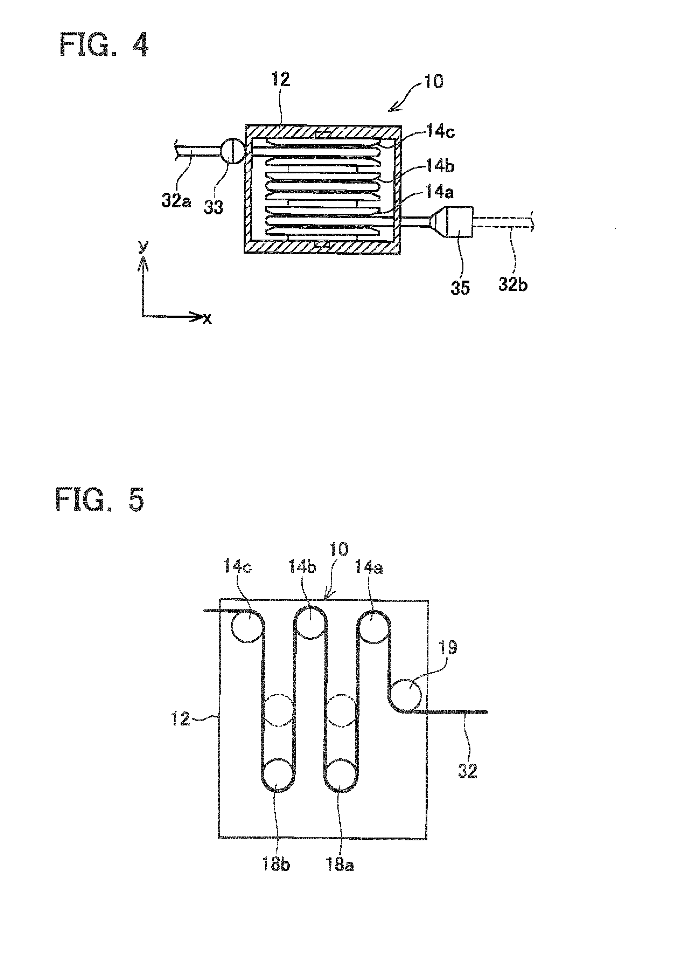

A pulley mechanism is housed within the housing 12, and includes fixed pulleys 14a through 14c and movable pulleys 18a and 18b. The fixed pulleys 14a through 14c are arranged to align along their axial direction (i.e. along a y direction). And the axes of the fixed pulleys 14a through 14c are positioned on same straight line, with these fixed pulleys 14a through 14c being attached rotatably upon the single shaft member 24. Since the fixed pulleys 14a through 14c can rotate with respect to the shaft member 24, accordingly the fixed pulleys 14a through 14c can rotate with respect to the housing 12. As shown in Figs. 3 and 4, guidance grooves for guiding the first electrical cord 32a are formed on outer peripheral surfaces of the fixed pulleys 14a through 14c.

The movable pulleys 18a and 18b are also arranged to align along a direction of their axial lines. A spacer 26 is disposed between the movable pulleys 18a and 18b. The axial lines of the movable pulleys 18a and 18b are positioned on same straight line, and both of the movable pulleys 18a and 18b are attached rotatably upon the single shaft member 20. Since the shaft member 20 is fitted into the guide grooves 22 so as to be slidable, accordingly the movable pulleys 18a and 18b, while being capable of rotating with respect to the housing 12, also can slide in the up and down direction (i.e. in the z direction). Guidance grooves for guiding the first electrical cord 32a are also formed on outer peripheral surfaces of the movable pulleys 18a and 18b.

The first electrical cord 32a is wound into the pulley mechanism described above in the following manner. That is, after having been brought into the housing 12 via the through hole 12a, the first electrical cord 32a first is passed over the fixed pulley 14c, next is passed around the movable pulley 18b, and then is passed around the fixed pulley 14b, around the movable pulley 18a, and over the fixed pulley 14a. After having been passed over the fixed pulley 14a, the first electrical cord 32a is brought out of the housing 12 via the through hole 12b.

It should be understood that while, in the pulley mechanism of this embodiment, as described above, the fixed pulleys 14a through 14c are actually arranged along the same axial line (i.e., along the y direction), and so are the movable pulleys 18a and 18b, in the interest of simplification of the drawing, in Fig. 1, the fixed pulleys 14a through 14c and the movable pulleys 18a and 18b are shown as being spaced apart along a direction that is orthogonal to this axial line (in other words, along an x direction).

The operation of the cord accommodation apparatus 10 described above will now be explained. In order to pull the electrical cord 32 out from the cord accommodation apparatus 10, the operator grasps the electrical tool 34, and applies operating force (i.e. tension) to the electrical cord 32 via the electrical tool 34. Due to this, the movable pulleys 18a and 18b are shifted upwards, and the electrical cord 32 is pulled out from within the housing 12. It should be understood that the movable pulleys 18a and 18b are shifted upwards together, since both the movable pulleys 18a and 18b are rotatably fitted upon the single shaft member 20. Moreover the movable pulleys 18a and 18b are shifted upwards smoothly, since the two ends of the shaft member 20 are guided by the guide grooves 22.

On the other hand, when the electrical cord 32 is to be accommodated in the cord accommodation apparatus 10, the operator need merely relax the operating force (i.e. tension) that he is applying to the electrical cord 32. Due to this, the movable pulleys 18a and 18b are shifted downwards by their own weight. And, when the movable pulleys 18a and 18b shift downwards in this manner, along therewith, the electrical cord 32 is automatically accommodated into the housing 12.

As will be clear from the above explanation, with the cord accommodation apparatus 10 of this embodiment, the electrical cord 32 is pulled out from within the housing 12 by the movable pulleys 18a and 18b being shifted upwards. Now, the operating force F for shifting the movable pulleys 18a and 18b upwards (in other words the tension force applied to the electrical cord 32) is constant, and bears no relationship to an amount by which the electrical cord 32 is pulled out. In other words, the operating force F that acts upon the electrical cord 32 is W/2n (where W is total weight of the movable pulleys and n is a number of movable pulleys; however, this gives no consideration to pulley efficiency, frictional force, and weight of the electrical cord 32), and this bears no relationship to the amount by which the electrical cord 32 is pulled out. Accordingly, a problem does not arise in regards to increasing the operating force F according to the amount of the electrical cord 32 that is pulled out.

As will be clear from the above explanation, it will be understood that the operating force F that is applied to the electrical cord 32 when pulling out the electrical cord 32 can be adjusted to any desired value by adjusting the number of the movable pulleys. Furthermore, a maximum pulling out amount of the electrical cord 32 is determined by the number n of movable pulleys and the amount of sliding L of the movable pulleys (refer to Fig. 2). In other words, since the maximum amount L by which the electrical cord 32 can be pulled out is L×2n (where n is the number of movable pulleys), accordingly it is possible to adjust this maximum pulling out amount by adjusting the number of movable pulleys and/or their amount of sliding.

Furthermore, with the cord accommodation apparatus 10 described above, it is sufficient simply to wind the electrical cord 32 over the fixed pulleys 14a through 14c and the movable pulleys 18a and 18b. Due to this, it is possible to employ an already existing electrical cord without subjecting it to any particular processing. Moreover, it is possible to prevent the electrical cord 32 being electrically disconnected, since the electrical cord 32 is not excessively bent. Yet further, it is possible to dispense with any unnecessary components such as a slip ring or the like, such as are required in a case of a drum type accommodation apparatus. Due to this, it is possible to prevent bad contacting due to wear and tear upon the slip ring, and an occurrence of noise due to contact with the slip ring. For these reasons, reliability of the cord accommodation apparatus 10 of this embodiment is high.

Furthermore, with the cord accommodation apparatus 10 described above, a surplus portion of the electrical cord 32 is accommodated within the housing 12 both when the electrical tool 34 is in use and when it is not in use, so that it is ensured that sagging of the electrical cord 32 does not take place. Due to this, it is possible to prevent contact between the electrical cord 32 and the automobile 50 or the like from occurring.

Furthermore, with the cord accommodation apparatus 10 described above, since the fixed pulleys 14a through 14c and the movable pulleys 18a and 18b are arranged along the axial direction (i.e. along the y direction), accordingly increase of a volume of the housing 12 is effectively prevented. In other words, it is possible to accommodate the fixed pulleys 14a through 14c and the movable pulleys 18a and 18b in less space by arranging these pulleys 14a through 14c, 18a, and 18b along the axial direction (i.e. along the y direction), as compared to a case in which the fixed pulleys 14a through 14c and the movable pulleys 18a and 18b are arranged along the direction that is orthogonal to their axial directions (i.e. along the x direction).

It should be understood that width and depth of the guidance grooves that are formed on the outer peripheral surfaces of the fixed pulleys 14a through 14c and on the outer peripheral surfaces of the movable pulleys 18a and 18b may be set as appropriate, according to size of the electrical cord 32. Moreover, the electrical cord that is accommodated in the cord accommodation apparatus 10 is not restricted to being of the round type; cords of different types can also be accommodated (a flat cord, for example).

While the details of an embodiment have been explained above, these are not to be considered as being limitative, or as limiting the scope of the Claims. Embodiments in which various alterations and changes have been made to the concrete case described above by way of example are also included within the scope of the techniques described in the Claims.

That is, in the embodiments described above, although the fixed pulleys 14a through 14c and the movable pulleys 18a and 18b were arranged as being lined up along the direction of their axial lines (i.e. along the y direction), the technique disclosed in this specification is not to be considered as being limited to this configuration. It would also be possible to provide other fixed pulleys and movable pulleys that are arranged along a direction orthogonal to their axial lines (i.e. along the x direction) to a plurality of fixed pulleys and movable pulleys that are arranged along the direction of their axial lines (i.e. along the y direction). In other words, the fixed pulleys and the movable pulleys may be arranged in a two dimensional configuration, according to the space available for installation of the cord accommodation apparatus and so on. It should be understood that if there is not sufficient space available in the axial direction of the fixed pulleys and the movable pulleys (i.e. in the y direction), while there is sufficient space available in the direction orthogonal to that axial direction (i.e. in the x direction), then it will be acceptable to arrange the fixed pulleys and the movable pulleys only along the x direction. In other words, the fixed pulleys and the movable pulleys may not be arranged to align along their axial direction (i.e. the y direction).

Furthermore while, in the embodiments described above, the electrical cord 32 was wound only once around the fixed pulleys 14a through 14c and the movable pulleys 18a and 18b, the technique disclosed in this specification is not to be considered as being limited to this configuration. For example, the electrical cord may be wound around the fixed pulleys and/or the movable pulleys a plurality of times.

Furthermore, as shown in Fig. 5, a direction alteration pulley 19 around which the electrical cord 32 passes after it has been pulled off from the fixed pulley 14a may be provided. It is possible to adjust a position in a height direction at which the electrical cord is pulled out from the housing 12 by adjusting a position of this direction alteration pulley 19 in the height direction (i.e. in the z direction).

Moreover, a ratchet mechanism that holds the electrical cord 32 in the pulled out position after it has been pulled out from the housing 12, and a release mechanism that releases the holding of the electrical cord 32 by this ratchet mechanism may be provided to the cord accommodation apparatus 10 described above. By providing mechanisms of these types, it is possible to prevent the electrical cord 32 being automatically accommodated within the housing 12 when the workman lets go of the electric tool 34.

Furthermore while, in the embodiments described above, the shaft member 20 that rotatably supports the movable pulleys 18a and 18b is guided by the guide grooves 22 in the housing 12, the technique disclosed in this specification is not to be considered as being limited to this configuration. Guide grooves may not be formed in the housing, and may not guide the shaft member that supports the movable pulleys with the housing. Furthermore while, in the embodiments described above, the two movable pulleys 18a and 18b were rotatably supported upon the single shaft member 20, a separate shaft member for each of the movable pulleys 18a and 18b may be provided. If a separate shaft member is thus provided for each of the movable pulleys, then it is possible to adjust the position in the height direction of one of the movable pulleys to a position that is different from the position of the other movable pulley. By configuring as above, it is possible to perform fine adjustment of the amount by which the electrical cord is pulled out in a satisfactory manner.

Furthermore while, in the embodiments described above, an example has been shown in which the cord accommodation apparatus 10 is applied to the production line for automobiles 50, the technique disclosed in this specification can also be used for other applications. For example, it may be applied to a charging stand for charging a battery that is mounted to a plug-in hybrid vehicle (a PHEV automobile) or an electric vehicle (an EV) or the like.

It should be understood that while, in the cord accommodation apparatus 10 described above, it is arranged for the movable pulleys 18a and 18b to shift along the vertical direction (i.e. along the z direction), it would also be acceptable to arrange for the movable pulleys 18a and 18b to shift slantingly at an angle to a vertical direction. In this case as well, as the electrical cord is pulled out, the movable pulleys 18a and 18b are shifted upwards due to the operating force applied by the operator, and the electrical cord is accommodated by the movable pulleys 18a and 18b dropping downwards due to their own weight.

Since the technical elements explained in this specification and in the drawings are capable of providing technical utility either singly or in various combinations, accordingly they are not to be considered as being limited to being combined as described in the Claims of this application. Moreover, the technology shown by way of example in this specification and in the drawings is capable of attaining a plurality of objectives simultaneously, and has technical utility for attaining each of those objectives individually.

## Claims

1. A cord accommodation apparatus that accommodates an electrical cord, the cord accommodation apparatus comprising:
a housing, and a pulley mechanism, wherein:
the pulley mechanism comprises a plurality of movable pulleys, and each of the movable pulleys is attached to the housing so as to shift freely in an up and down direction, with a middle section of the electrical cord being wound around, and
when the electrical cord is pulled out from the accommodation apparatus, at least one of the plurality of movable pulleys is shifted upwards with respect to the housing, and the electrical cord is accommodated in the accommodation apparatus by this movable pulley, that had previously shifted upwards, shifting downwards.

2. The cord accommodation apparatus according to Claim 1, wherein at least two of the plurality of movable pulleys are arranged along a direction of their axial lines.

3. The cord accommodation apparatus according to Claim 2, wherein the pulley mechanism further comprises a third movable pulley that, with respect to the at least two movable pulleys that are arranged along the direction of their axial lines, is arranged along a direction that is orthogonal to that axial line direction, and
wherein the middle section of the electrical cord is also wound around the third movable pulley.

4. The cord accommodation apparatus according to Claim 2 or 3, wherein the axial lines of the at least two movable pulleys that are arranged along the direction of their axial lines are positioned on same straight line, and the at least two movable pulleys are rotatably supported by a single shaft member.

5. The cord accommodation apparatus according to any one of Claims 1 to 4, wherein the middle section of the electrical cord is wound a plurality of times around at least one of the plurality of movable pulleys.

6. The cord accommodation apparatus according to any one of Claims 1 to 5, wherein the pulley mechanism further comprises a direction alteration pulley that changes a position at which the electrical cord is pulled out.
